(19) Europäisches Patentamt
European Patent Office
Office européen des brevets

(11) Veröffentlichungsnummer: **0 000 528**
**B1**

(12) **EUROPÄISCHE PATENTSCHRIFT**

(21) Anmeldenummer: **78100412.2**

(22) Anmeldetag: **17.07.78**

(51) Int. Cl.³: **C 07 F 9/165, A 01 N 57/12**

# (54) Neue organische Phosphorsäureester, Verfahren zu ihrer Herstellung und ihre Verwendung als Insektizide, Akarizide und Nematozide

(30) Priorität: **25.07.77 JP 88352/77**

(43) Veröffentlichungstag der Anmeldung:
**07.02.79 Patentblatt 79/03**

(45) Bekanntmachung des Hinweises auf die Patenterteilung:
**23.07.80 Patentblatt 80/15**

(84) Benannte Vertragsstaaten:
**BE CH DE FR GB NL SE**

(56) Entgegenhaltungen:
**FR - A - 2 359 846**

(73) Patentinhaber: **Nihon Tokushu Noyaku Seizo K.K.**
**No. 8, 2-chome, Nihonbashi Muromachi, Chuo-Ku**
**Tokyo JP**

(72) Erfinder: **Saito, Junichi**
**3-7-12, Osawa Mitaka-shi**
**Tokyo JP**
**Kudamatsu, Akio**
**177, Kariyado Nakahara-ku Kawasaki-shi**
**Kanagawa-ken JP**
**Kume, Toyohiko**
**3-18-1, Higashi-Toyoda Hino-shi**
**Tokyo JP**
**Tsuboi, Shinichi**
**999, Mogusa Hino-shi**
**Tokyo JP**

(74) Vertreter: **Utermann, Jasper, Dr.**
**Bayer AG c/o Zentralbereich Patente Marken und Lizenzen**
**D - 5090 Leverkusen Bayerwerk (DE)**

**EP 0 000 528 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Neue organische Phosphorsäureester, Verfahren zu ihrer Herstellung und ihre Verwendung als Insektizide, Akarizide und Nematozide

Die Erfindung betrifft neue organische Phosphorsäureester ein Verfahren zu ihrer Herstellung und ihre Verwendung als Insektizide, Akarizide und Nematozide.

Aus der DD—PS 107 581 ist bekannt, daß organische Phosphorsäureester der allgemeinen Formel

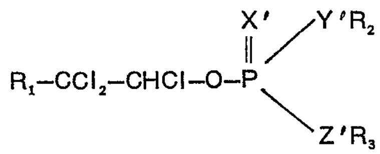

(VIII),

worin

$R_1$ Chlor oder Monochlormethyl,

$R_2$ Alkyl,

$R_3$ Alkyl, Cycloalkyl, Alkenyl, Alkinyl, Aryl oder gegebenenfalls ein- oder mehrfach durch Alkyl, Aryl, Halogen, Nitro, Cyan, Alkoxy oder Alkylmercapto substituiertes Aryl und

X′, Y′ und Z′ jeweils Sauerstoff oder Schwefel bedeuten, insektizide und akarizide Wirkung besitzen.

Aus der japanischen Patentveröffentlichung Nr. 101131/76 geht hervor, daß organische Phosphorsäureester der allgemeinen Formel

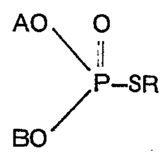

(IX),

worin

R niederes Alkyl,

A niederes Alkyl, Cycloalkyl oder Halogenalkyl und

B niederes Alkyl oder Halogenalkyl bedeuten, mit der Maßgabe, daß A und B nicht für gleiche Alkylgruppen stehen, fungizide Wirkung bei Anwendung auf die Wasseroberfläche besitzen.

Die Erfindung stellt als neue Verbindungen die organischen Phosphorsäureester der allgemeinen Formel

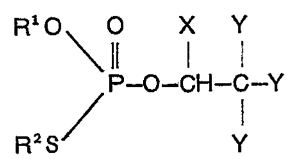

(I)

bereit, worin

$R^1$ ein Alkyl mit 1—8 C-Atomen,

$R^2$ ein Alkyl mit 1—8 C-Atomen oder ein Alkoxyalkyl mit 2—8 C-Atomen,

X Wasserstoff, ein Halogenalkyl mit 1—8 C-Atomen oder Alkoxy mit 1—8 C-Atomen und

Y Halogen bedeuten.

Es wurde gefunden, daß die Verbindungen der Formel (I) ausgezeichnete insektizide, akarizide und nematozide Wirkung besitzen.

Vorzugsweise bedeutet $R^1$ Alkyl mit 1—3 C-Atomen (insbesondere Methyl, Äthyl, oder n-Propyl), $R^2$ Alkyl mit 3 oder 4 C-Atomen (insbesondere n-Propyl, n-Butyl, sec.Butyl oder Isobutyl) oder Alkoxyalkyl mit 3—6 C-Atomen (insbesondere 2-($C_1$—$C_4$-Alkoxy)äthyl wie Methoxyäthyl, Äthoxyäthyl,Propoxyäthyl, Isopropoxyäthyl oder n-Butoxyäthyl), X bedeutet Wasserstoff, Trihalogenmethyl (insbesondere Trichlormethyl oder Trifluormethyl) oder Alkoxy mit 1—4 C-Atomen (insbesondere Äthoxy) und Y Fluor oder Chlor.

Die vorliegende Erfindung betrifft auch ein Verfahren zur Herstellung einer Verbindung der allgemeinen Formel (I), wonach

(a) ein Thiophosphorylhalogenid der allgemeinen Formel

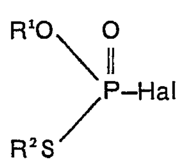

(II),

worin
$R^1$ und $R^2$ die oben angeführte Bedeutung besitzen und
Hal Halogen bedeutet, mit einem Alkohol oder Alkoholat der allgemeinen Formel

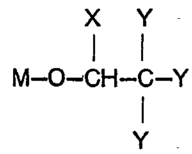

(III),

worin
X und Y die oben angeführte Bedeutung besitzen und
M Wasserstoff oder ein Alkalimetall bedeutet, oder
(b) ein Thiophosphorylhalogenid der allgemeinen Formel

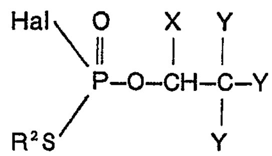

(IV),

worin
$R^2$, X und Y die oben angeführte Bedeutung besitzen und
Hal Halogen bedeutet, mit einem Alkohol oder Alkoholat der allgemeinen Formel

$$M—O—R^1 \qquad (V),$$

worin
$R^1$ die oben angeführte Bedeutung besitzt und
M für Wasserstoff oder ein Alkalimetall steht, oder
(c) ein Phosphit der allgemeinen Formel

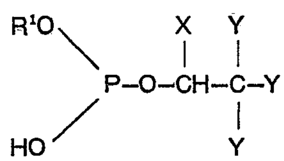

(VI),

worin
$R^1$, X und Y die oben angeführte Bedeutung besitzen, mit einem Sulfenylhalogenid der allgemeinen Formel

$$R^2S—Hal \qquad (VII),$$

worin
$R^2$ die oben angeführte Bedeutung besitzt und
Hal Halogen bedeutet, umgesetzt wird.

Beispiele für die als Ausgangsverbindungen in der Verfahrensvariante(a) geeigneten Thiophosphorylhalogenide der allgemeinen Formel (II) sind O - Methyl - S - n - propylphosphorchloridthioat, O - Äthyl - S - n - propylphosphorchloridthioat, O,S, - Di - n - propylphosphorchloridthioat, O - Äthyl - S - n - butylphosphorchloridthioat, O - Äthyl - S - isobutylphosphorchloridthioat, O - Äthyl - S - sec.butylphosphorchloridthioat, O - Äthyl - S - methoxyäthylphosphorchloridthioat, O - Äthyl - S - äthoxyäthylphosphorchloridthioat, O - Äthyl - S - n - propoxyäthylphosphorchloridthioat, O - Äthyl - S - isopropoxyäthylphosphorchloridthioat und O - Äthyl - S - n - butoxyäthylphosphorchloridthioat und die entsprechenden Bromide.

Beispiele für in Verfahrensvariante (a) als Ausgangsmaterialien geeignete Alkohole und Alkoholate der allgemeinen Formel (III) sind 2,2,2 - Trifluoräthanol, 2,2,2 - Trichloräthanol, 1,1,1,3,3,3 - Hexafluor - 2 - propanol, 1,1,1,3,3,3 - Hexachlor - 2 - propanol und 1 - Äthoxy - 2,2,2 - trifluoräthanol sowie die Natrium- oder Kaliumsalze dieser Alkohole genannt.

Wenn als Ausgangsstoffe in der Verfahrensvariante (a) O - Methyl - S - n - propylphosphorchloridthioat und 2,2,2 - Trifluoräthanol eingesetzt werden, so kann der Verlauf der Reaktion durch folgendes Schema dargestellt werden:

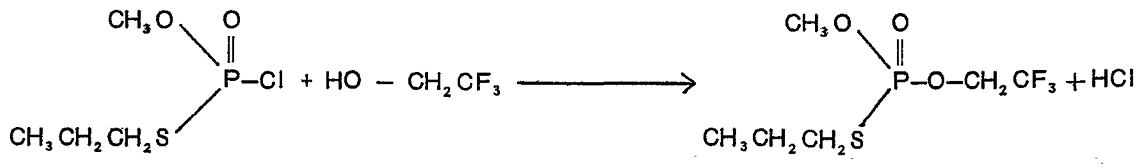

Beispiele für geeignete Thiophosphorylhalogenide der allgemeinen Formel (IV) als Ausgangsverbindungen in der Verfahrensvariante (b) sind O - 2,2,2 - Trifluoräthyl - S - n - propylphosphorchloridthioat, O - 2,2,2 - Trichloräthyl - S - n - propylphosphorchloridthioat, O - 1,1,1,3,3,3 - Hexafluor - 2 - propyl - S - n - propylphosphorchloridthioat, O - 1,1,1,3,3,3 - Hexachlor - 2 - propyl - S - n - propylphosphorchloridthioat, O - 2,2,2 - Trifluoräthyl - S - n - butylphosphorchloridthioat, O - 2,2,2 - Trichloräthyl - S - n - butylphosphorchloridthioat, O - 1,1,1,3,3,3 - - Hexafluor - 2 - propyl - S - n - butylphosphorchloridthioat, O - 2,2,2 - Trifluoräthyl - S - isobutylphosphorchloridthioat, O - 2,2,2 - Trichloräthyl - S - isobutylphosphorchloridthioat, O - 1,1,1,3,3,3 - Hexafluor - 2 - propyl - S - sec.butylphosphorchloridthioat. O - 2,2,2 - Trifluoräthyl - S - sec.butylphosphorchloridthioat, O - 2,2,2 - Trichloräthyl - S - sec.butylphosphorchloridthioat, O - 2,2,2 - Trifluoräthyl - S - 2 - methoxyäthylphosphorchloridthioat, O - 2,2,2 - Trifluoräthyl - S - 2 - äthoxyäthylphosphorchloridthioat, O - 2,2,2 - Trichloräthyl - S - 2 - äthoxyäthylphosphorchloridthioat, O - 1,1,1,3,3,3 - Hexafluor - 2 - propyl - S - 2 - äthoxyäthylphosphorchloridthioat, O - 2,2,2 - Trifluoräthyl - S - (2 - n - propoxyäthyl) - phosphorchloridthioat, O - 2,2,2 - Trifluoräthyl - S - 2 - isopropoxyäthylphosphorchloridthioat, O - 2,2,2 - Trichloräthyl - S - 2 - isopropoxyäthylphosphorchloridthioat und O - 2,2,2 - Trifluoräthyl - S - (2 - n - butoxyäthyl) - phosphorchloridthioat und die entsprechenden Bromsalze.

Als Beispiele für in der Verfahrensvariante (b) als Ausgangsverbindungen einsetzbare Alkohole und Alkoholate der allgemeinen Formel (V) seien Methanol, Äthanol und n-Propanol und die Natrium- oder Kaliumsalze dieser Alkohole genannt.

Bei Verwendung von O - 2,2,2 - Trifluoräthyl - S - n - butylphosphorchloridthioat und Äthanol als Ausgangsmaterialien in der Verfahrensvariante (b) kann die Umsetzung durch folgendes Schema dargestellt werden:

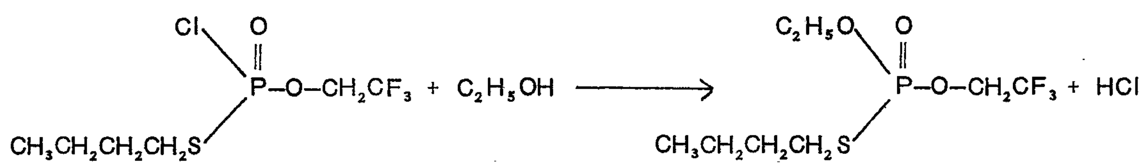

Beispiele für in der Verfahrensvariante (c) geeignete Phosphite der allgemeinen Formel (VI) sind O - Methyl - O - 2,2,2 - trifluoräthylphosphit, O - Methyl - O - 2,2,2 - Trichloräthylphosphit, O - Äthyl - O - 1,1,1,3,3,3 - hexafluor - 2 - propylphosphit, O - Äthyl - O - 1,1,1,3,3,3 - hexachlor - 2 - propylphosphit, O - Äthyl - O - 1 - äthoxy - 2,2,2 - trifluoräthylphosphit, O - n - Propyl - O - 2,2,2 - trifluoräthylphosphit, O - Äthyl - O,2,2,2 - trifluoräthylphosphit, O - Äthyl - O,2,2,2 - trichloräthylphosphit.

Als Beispiele für in der Verfahrensvariante (c) als Ausgangsverbindungen geeignete Sulfenylhalogenide der allgemeinen Formel (VII) seien 1-Propansulfenylchlroid, 1-Butansulfenylchlorid, Isobutansulfenylchlorid, 2-Butansulfenylchlorid, Methoxyäthansulfenylchlorid, Äthoxyäthansulfenylchlorid, n - Propoxyäthansulfenylchlorid, Isopropoxyäthansulfenylchlorid und n - Butoxyäthansulfenylchlorid und die entsprechenden Bromsalze genannt.

Jedes der Sulfenylchloride oder Bromide kann leicht nach einem herkömmlichen Verfahren hergestellt werden, welches darin besteht, daß das entsprechende Disulfid mit Chlor, Brom, Sulfurylchlorid oder Sulfurylbromid umgesetzt wird.

Wenn als Ausgangsstoffe in der Verfahrensvariante (c) O - Äthyl - O - 2,2,2 - trichloräthylphosphit und 1 - Butansulfenylchlorid eingesetzt werden, kann die Umsetzung durch folgendes Schema dargestellt werden:

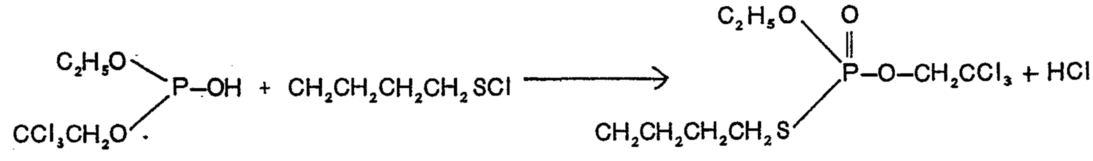

Die Umsetzung nach den Varianten (a), (b) und (c) des erfindungsgemäßen Verfahrens kann in Gegenwart eines Säurebindemittels vorgenommen werden. Beispiele für geeignete Säurebindemittel sind die Hydroxide, Carbonate, Bicarbonate und Alkoholate der Alkalimetalle sowie tertiäre Amine wie z.B. Triäthylamin, Diäthylanilin oder Pyridin.

Das Endprodukt kann nach der Verfahrensvariante (a) oder (b) mit guter Ausbeute und hohem Reinheitsgrad auch dadurch erhalten werden, wenn man ohne Säurebindemittel arbeitet und dafür Thiophosphorylhalogenid der Formel (II) oder (IV) mit einem Alkalimetallalkoholat der Formel (III) oder (V) umsetzt.

Die erfindungsgemäßen Verfahrensvarianten (a), (b) und (c) werden vorzugsweise unter Verwendung eines Lösungs- oder Verdünnungsmittels durchgefürt. Beispiele für derartige Lösungs- oder Verdünnungsmittel sind Wasser und inerte organische Lösungsmittel wie aliphatische, alicyclische und aromatische Kohlenwasserstoffe (die gegebenenfalls chloriert sein können) wie z.B. Hexan, Cyclohexan, Petroläther, Ligroin, Benzol, Toluol, Xylol, Methylenchlorid, Chloroform, Tetrachlorkohlenstoff, Äthylenchlorid, Trichloräthylen und Chlorbenzol; Äther wie z.B. Diäthyläther, Methyläthyläther, Diisopropyläther, Dibutyläther, Propylenoxid, Dioxan und Tetrahydrofuran; Ketone wie z.B. Aceton, Methyläthylketon, Methylisopropylketon und Methylisobutylketon; Nitrile wie z.B. Acetonitril, Propionitril und Acrylnitril; Alkohole wie z.B. Methanol, Äthanol, Isopropanol, Butanole und Äthylenglycol; Ester wie z.B. Äthylacetat und Amylacetat; Säureamide wie z.B. Dimethylformamid und Dimethylacetamid; Sulfone und Sulfoxide, wie z.B. Dimethylsulfoxid und Dimethylsulfon; und organische Basen wie z.B. Pyridin.

Die Varianten (a), (b) und (c) des erfindungsgemäßen Verfahrens können innerhalb eines weiten Temperaturbereichs durchgefürt werden. Im allgemeinen wird das Verfahren bei Temperaturen von —20°C bis zum Siedepunkt des Gemisches, vorzugsweise bei 0—100°C, durchgeführt. Die Umsetzung wird zweckmäßig bei Atmosphärendruck vorgenommen, sie kann jedoch auch bei erhöhtem oder vermindertem Druck durchgefürt werden.

Wie schon erwähnt, besitzen die erfindungsgemäßen Verbindungen ausgezeichnete insektizide, akarizide und nematozide Wirkung. Sie können daher zur Bekämpfung von Pflanzenschädlingen und solchen Schädlingen, die auf dem Hygienesektor und im Vorrats- bzw. Materialschutzsektor vorkommen, eingesetzt werden und verbinden geringe Phytotoxizität mit guter Wirkung gegenüber stechenden und beißenden Insekten und Milben.

Aus diesen Gründen können die erfindungsgemäßen Verbindungen mit gutem Erfolg als Schädlingsbekämpfungsmittel auf den Gebieten des Pflanzenschutzes, dem Hygienesektor und des Schutzes von gelagerten Produkten eingesetzt werden.

Die erfindungsgemäßen Verbindungen können auch auf dem Gebiet der Tiermedizin eingesetzt werden, da sie gegen Tierparasiten, insbesondere Ektoparasiten wie z.B. parasitische Fliegenlarven wirksam sind.

Die erfindungsgemäßen Verbindungen sind gut verträglich für Pflanzen, nur geringfügig toxisch gegenüber Warmblütern und können zur Bekämpfung von arthropoden Schädlingen, insbesondere Insekten und Akariden, und nematoden Schädlingen, wie sie in Land- und Forstwirtschaft auftreten, zum Schutz von gelagerten Produkten und Materialien und auf dem Gebiet der Hygiene eingesetzt werden. Sie sind wirksam gegenüber normal empfindlichen und resistenten Gattungen und gegenüber allen oder einigen Entwicklungsphasen. Zu den vorstehend angeführten Schädlingen gehören:

Aus der Ordnung der Thysanura z.B. Lepisma saccharina; aus der Ordnung der Collembola, z.B. Onychiuros armatus; aus der Ordnung der Orthoptera z.B Blatta orientalis, Periplaneta americana, Leucophaea maderae, Blattella germanica, Acheta domesticus, Gryllotalpa spp., Locusta migratoria migratorioides, Melanoplus differentialis und Schistocerca gregaria; aus der Ordnung der Dermaptera, z.B. Forficula auricularia; aus der Ordnung der Isoptera, z.B. Reticulitermes spp; aus der Ordnung der Anoplura, z.B. Phylloxera vastatrix, Pemphigus spp., Pediculus humanus corporis, Haematopinus spp. und Linognathus spp.; aus der Ordnung der Mallophaga, z.B. Trichodectes spp. und Damalinea spp.; aus der Ordnung der Thysanoptera, z.B. Hercinothrips femoralis und Trips tabaci; aus der Ordnung der Heteroptera, z.B. Eurygaster spp., Dysdercus intermedius, Piesma quadrata, Cimex lectularius, Rhodnius prolixus und Triatoma spp.; aus der Ordnung der Homoptera, z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humili, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. und Psylla spp.; aus der Ordnung der Lepidoptera, z.B. Pectinophora gossypiella, Bupalus piniarius, Cheimatobia brumata; Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima und Tortrix viridana; aus der Ordnung der Coleoptera, z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon

solstitialis und Costelytra zealandica; aus der Ordnung der Hymenoptera, z.B. Diprion spp., Hoplocampa spp., Lasius spp., Monomorium pharaonis und Vespa spp.; aus der Ordnung der Diptera, z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae und Tipula paludosa; aus der Ordnung der Siphonaptera, z.B. Xenopsylla cheopis und Ceratophyllus spp.; aus der Ordnung der Acarina, z.B. Acarus siro, Argas spp., Ornithodoros spp., Dermanyssus gallinae, Eriophyes ribis, Phyllocoptruta oleivora, Boophilus spp.; Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp. und Tetranychus spp..

Zu den Pflanzenparasiten unter den Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp. und Trichodorus spp..

Die Wirkstoffe können in die üblichen Formulierungen wie z.B. Lösungen, Emulsionen, benetzbare Pulver, Suspensionen, Pulver, Stäube, Schäume, Pasten, lösliche Pulver, Granulate, Aerosole, Suspensions - Emulsions - Konzentrate, Samenbehandlungspulver, natürliche und synthetische, mit Wirkstoff imprägnierte Materialien, sehr feine Kapseln in polymeren Substanzen, Samenbeschichtungskompositionen und für die Verwendung in Verräucherungsausrüstungen bestimmte Formulierungen wie z.B. Verräucherungspatronen, -kanister und -schlangen sowie in ULV-Kaltnebel und Warmnebelformulierungen übergeführt werden.

Die Formulierungen können nach bekannten Verfahren, d.h. z.B. durch Vermischen der Wirkstoffe mit Streckmitteln, d.h. flüssigen oder verflüssigten, gasförmigen oder festen Verdünnungs- oder Trägermitteln, gegebenenfalls unter Verwendung von oberflächenaktiven Mitteln, d.h. Emulgatoren und/oder Dispergiermitteln und/oder Schaumbildnern hergestellt werden. Wenn als Streckmittel Wasser eingesetzt wird, können organische Lösungsmittel z.B. auch als Hilfslösungsmittel eingesetzt werden.

Als flüssige Verdünnungs- oder Trägermittel, insbesondere als Lösungsmittel, sind vor allem aromatische Kohlenwasserstoffe wie z.B. Xylol, Toluol oder Alkylnaphthaline, chlorierte aromatische oder chlorierte aliphatische Kohlenwasserstoffe wie Chlorbenzole, Chloräthylene oder Methylenchlorid, aliphatische oder alicyclische Kohlenwasserstoff, wie z.B. Cyclohexan oder Paraffine wie z.B. Erdölfraktionen, Alkohole wie z.B. Butanol oder Glycol und ihre Äther und Ester, Ketone wie z.B. Aceton, Methyläthylketon, Methylisobutylketon oder Cyclohexanon oder stark polare Lösungsmittel wie z.B. Dimethylformamid und Dimethylsulfoxid sowie Wasser geeignet.

Unter verflüssigten, gasförmigen Verdünnungsoder Trägermitteln sind Flüssigkeiten zu verstehen, die bei normalen Temperaturen und bei normalem Druck gasförmig sind, wie z.B. Treibmittel für Aerosole, wie halogenierte Kohlenwasserstoffe sowie Butan, Propan, Stickstoff und Kohlendioxid.

Als feste Trägermittel sind vermahlene natürliche Mineralien wie z.B. Kaoline, Tone, Talk, Kreide, Quarz, Attapulgit, Montmorillonit oder Kieselgur und vermahlene synthetische Mineralien wie z.B. hochdisperse Kieselsäure Aluminiumoxid und Silikate geeignet. Als feste Trägermittel für Granulate können zerkleinerte und gebrochene natürliche Gesteine wie z.B. Kalzit, Marmor, Bimsstein, Sepiolit und Dolomit, synthetische Granulate aus anorganischen und organischen Mehlen und die Granulate organischer Materialien wie z.B. Sägemehl bzw. Sägespäne, Kokosnußschallen, Maiskolben und Tabakstengel verwendet werden.

Als Emulgatoren und/oder Schaumbildner können nichtionische oder anionische Emulgatoren wie z.B. Polyoxyäthylenfettsäureester, Polyoxyäthylenfettalkoholäther, wie z.B. Alkylarylpolyglycoläther, Alkylsulfonate, Alkylsulfate, Arylsulfonate sowie Albuminhydrolyseprodukte eingesetzt werden. Geeignete Dispergiermittel sind z.B. Ligninsulfitablaugen und Methylzellulose.

In den Formulierungen können Kleber wie z.B. Carboxymethylzellulose und natürliche und synthetische Polymere in Form von Pulvern, Granulaten oder Latices wie z.B. Gummi arabicum, Polyvinylalkohol und Polyvinylacetat verwendet werden.

Es können Färbemittel wie anorganische Pigmente, z.B. Eisenoxid, Titanoxid und Preußischblau und organische Farbstoffe wie z.B. Alizarinfarbstoffe, Azofarbstoffe oder Metallphthalocyaninfarbstoffe und Spurennährstoffe wie z.B. die Salz von Eisen, Mangan, Bor, Kupfer, Kobalt, Molybdän und Zink eingesetzt werden.

Die erfindungsgemäßen Wirkstoffe können in den Formulierungen vermischt mit anderen Wirkstoffen wie z.B. Fungiziden, Insektiziden, Akariziden, Nematiziden, Herbiziden, Abschreckungsmittel für Vögel, Wachstumsregulatoren, Pflanzennährstoffen und Bodenstrukturverbesserungsmitteln verwendet werden.

Die Formulierungen enthalten im allgemeinen 0,1—95 Gew.-%, vorzugsweise 0,5—90 Gew.-%, Wirkstoff.

Die erfindungsgemäßen Wirkstoffe können in Form von handelsüblichen Formulierungen oder aus diesen Formulierungen hergestellten Präparaten eingesetzt werden.

Der Wirkstoffgehalt der handelsüblichen Formulierungen kann innerhalb eines weiten Bereiches variieren. Die Wirkstoffkonzentration in den eingesetzten Formulierungen kann 0,0001—20 Gew.-%, vorzugsweise 0,005—10 Gew.-% Wirstoff betragen.

Die Wirkstoffe können nach herkömmlichen, für die betreffende Verwendungsform geeigneten Verfahren verwendet werden.

Im allgemeinen werden 0,03—10 kg, vorzugsweise 0,3—6 kg Wirkstoff pro Hektar Bodenfläche eingesetzt.

Die vorliegende Erfindung betrifft auch eine insektizide, akarizide oder nematozide Komposition, die als Wirkstoff eine erfindungsgemäße Verbindung vermischt und einem festen oder verflüssigten, gasförmigen Verdünnungs- oder Trägermittel oder vermischt mit einem ein oberflächenaktives Mittel enthaltenden flüssigen Verdünnungs- oder Trägermittel enthält.

Die Erfindung betrifft auch ein Verfahren zur Bekämpfung von Insekten, Akariden oder Nematoden, welches darin besteht, daß auf die Insekten, Akariden oder Nematoden oder auf deren Lebensraum eine erfindungsgemäße Verbindung allein oder in Form einer Komposition, die als Wirkstoff eine erfindungsgemäße Verbindung vermischt mit einem Verdünnungs- oder Trägermittel enthält, aufgebracht wird.

Durch Anwendung der erfindungsgemäßen Mittel werden Ernten an Ackerbauprodukten erhalten, die vor Schäden durch Insekten, Akariden oder Nematoden dadurch geschützt sind, daß sie in Gebieten gezogen werden, auf welche unmittelbar vor und/oder während des Wachstums der Pflanzen eine erfindungsgemäße Verbindung allein oder vermischt mit einem Verdünnungs- oder Trägermittel aufgebracht wird.

Di üblichen Verfahren zur Erzielung einer Ernte an Ackerbauprodukten können durch die vorliegende Erfingung verbessert werden.

In den nachstehenden Beispielen werden verschiedene erfindungsgemäße Schädlingsbekämpfungskompositionen beschrieben. Die erfindungsgemäßen Verbindungen sind jeweils mit der Zahl des entsprechenden Herstellungsbeispiels bezeichnet.
Teile bedeuten Gewichtsteile.

### Beispiel (i)

(Benetzbares Pulver)

15 Teile der Verbindung Nr. 1, 80 Teile eines Gemisches (1:5) aus Kieselgur und Kaolin und 5 Teile eines Emulgators (eines Polyoxyäthylenalkylphenyläthers) werden pulverisiert und zu einem benetzbaren Pulver vermischt, das vor dem Aufsprühen mit Wasser auf eine Konzentration von 0,05 % verdünnt werden kann.

### Beispiel (ii)

(Emulgierbares Konzentrat)

30 Tiele der Verbindung Nr. 4, 30 Teile Xylol, 30 Teile Methylnaphthalin und 10 Teile eines Polyoxyäthylenalkylphenyläthers werden unter Rühren in ein emulgierbares Konzentrat übergeführt, das vor dem Aufsprühen mit Wasser auf eine Konzentration von 0,05 % verdünnt werden kann.

### Beispiel (iii)

(Staub)

2 Teile der Verbindung Nr. 7 und 98 Teile eines Gemisches (1:3) aus Talk und Ton werden pulverisiert und zu einem Staub vermischt, der verstreut werden kann.

### Beispiel (iv)

(Staub)

1,5 Teile der Verbindung Nr. 10, 0,5 Teile Isopropylhydrogenphosphat und 98 Teile eines Gemisches (1:3) aus Talk und Ton werden pulverisiert und zu einem Staub vermischt.

### Beispiel (v)

(Granulat)

10 Teile der Verbindung Nr. 15, 10 Teile Bentonit, 78 Teile eines Gemisches (1:3) aus Talk und Ton und 2 Teile Ligninsulfonat werden vermischt und mit 25 Teilen Wasser versetzt. Das Gemisch wird innig vermengt und darauf mittels Extrusionsgranulator zu einem Granulat von 350—700 $\mu$ verarbeitet, das bei 40—50°C getrocknet wird.

### Beispiel (vi)

(Granulat)

95 Teile Tonpulver mit einer Korngrößenverteilung von 0,2—2 mm werden in einen Drehmischer eingebracht und während des Drehens gleichmäßig mit einer Lösung aus 5 Teilen der Verbindung Nr. 16 in einem organischen Lösungsmittel besprüht und durch Trocknen bei 40—50°C in ein Granulat übergeführt.

### Beispiel (vii)

(öliges Präparat)

0,5 Teile der Verbindung Nr. 20, 20 Teile einer hochsiedenden, aromatischen Verbindung und

79,5 Teile Kerosin werden unter Rühren in ein öliges Präparat übergeführt.

Die insektizide, akarizide und nematozide Wirkung der erfindungsgemäßen Verbindungen ist aus den nachstehenden Biotestbeispielen ersichtlich.

In diesen Beispielen sind die erfindungsgemäßen Verbindungen jeweils mit der (in Klammer angeführten) Zahl des entsprechenden Herstellungsbeispiels bezeichnet, das später in der Beschreibung angeführt wird.

Die bekannten Vergleichsverbindungen sind wie folgt identifizidert:

(A) = 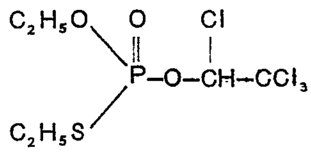

(in der DD–PS Nr. 107 581 beschrieben)

(B) = 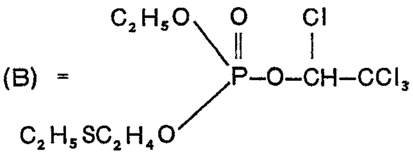

(in der DD–PS Nr. 107 581 beschrieben)

(C) = 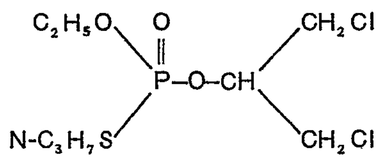

(in der japanischen Patentveroffentlichung Nr. 101 131/76 beschrieben)

Beispiel A

Test auf Wirkung gegenüber Larven der Spodoptera litura:
Lösungsmittel: Xylol 3 Gew.-Teile
Emulgator: Polyoxyäthylenalkylphenyläther 1 Gew.-Teil

Um den Wirkstoff in ein geeignetes Präparat überzuführen, wurde 1 Gew.-Teil Wirkstoff mit der oben angeführten Menge des die oben angeführte Menge an Emulgator enthaltenden Lösungsmittels vermischt und das Gemisch wurde mit Wasser auf eine vorgegebene Konzentration verdünnt.

Süßkartoffelblätter wurden in eine wässerige, eine vorgegebene Menge an Wirkstoff enthaltende Formulierung eingetaucht.

Die Blätter werden an der Luft getrocknet und dann in eine Petrischale von 9 cm Durchmesser eingelegt. Darauf werden 10 Larven der Spodoptere litura im dritten Entwicklungsstadium in die Petrischale eingesetzt. Die Schale wird in einer Klimakammer bei 28°C gehalten, nach Ablauf von 24 Stunden wird die Anzahl der toten Larven festgestellt und die Abtötungsrate berechnet. Die Ergebnisse sind aus Tabelle A ersichtlich.

Tabelle A

| | Abtötungsrate in % bei einer Wirkstoffkonzentration in tpM von | | |
|---|---|---|---|
| Verbindung | 1000 | 300 | 100 |
| (1) | 100 | 100 | |
| (2) | 100 | 100 | |
| (4) | 100 | 100 | 100 |
| (21) | 100 | 100 | |

Tabelle A (Fortsezung)

| Verbindung | Abtötungsrate in % bei einer Wirkstoffkonzentration in tpM von 1000 | 300 | 100 |
|---|---|---|---|
| (A) | 0 | 100 | |
| (B) | 0 | | |
| (C) | 0 | | |

Beispiel B

Test auf Wirkung gegenüber Callosobruchus chinensis.

Ein Filterpapier wird in eine Petrischale von 9 cm Durchmesser eingebreitet. Dann wird in die Schale 1 ml einer wässerigen Formulierung, die nach Beispiel A hergestellt wurde und eine vorgegebene Wirkstoffkonzentration aufweist, eingebracht. 20 Exemplare des Callosobruchus chinensis werden in die Petrischale gelegt und die Schale wird 24 Stunden in einer Klimakammer bei 28°C gehalten. Nach Ablauf dieses Zeitraums wird die Abtötungsrate festgestellt.

Die Ergebnisse sind aus Tabelle B ersichtlich.

Tabelle B

| Verbindung | Abtötungsrate in % bei einer Wirkstoffkonzentration in TpM von 1000 | 100 | 10 |
|---|---|---|---|
| (1) | 100 | 100 | 100 |
| (2) | 100 | 100 | 100 |
| (3) | 100 | 100 | 100 |
| (4) | 100 | 100 | |
| (5) | 100 | 100 | 100 |
| (6) | 100 | 100 | 100 |
| (7) | 100 | 100 | 100 |
| (8) | 100 | 100 | |
| (9) | 100 | 100 | 100 |
| (10) | 100 | 100 | |
| (11) | 100 | 100 | 100 |
| (12) | 100 | 100 | 100 |
| (13) | 100 | 100 | 100 |
| (14) | 100 | 100 | 100 |
| (15) | 100 | 100 | |
| (16) | 100 | 100 | 100 |
| (17) | 100 | 100 | |
| (18) | 100 | 100 | 100 |

Tabelle B (Fortsezung)

| Verbindung | Abtötungsrate in % bei einer Wirkstoffkonzentration in TpM von 1000 | 100 | 1 0 |
|---|---|---|---|
| (19) | 100 | 100 | 100 |
| (20) | 100 | 100 | 100 |
| (21) | 100 | 100 | |
| (22) | 100 | 100 | 100 |
| (A) | 100 | 0 | 0 |
| (B) | 100 | 0 | 0 |
| (C) | 100 | 0 | 0 |

Beispiel C

Test auf Wirkung auf den gegenüber Organophosphorpräparaten resistenten Nephotettix cincticeps.

Reispflanzen von etwa 10 cm Höhe werden in Töpfe mit einem Durchmesser von 12 cm eingepflanzt. Auf die Reispflanzen wird ein wässeriges Präparat, welches eine vorgegebene Wirkstoffkonzentration in der nach Beispiel A hergestellten Formulierung enthält, in Mengen von 10 ml pro Topf aufgebracht. Nach Trocknen des aufgebrachten Präparates werden über die Töpfe Maschendrahtkäfige von jeweils 7 cm Durchmesser und 14 cm Höhe gestülpt, in jeden Käfig werden 30 weibliche Imagines des gegenüber Organophosphorpräparaten resistenten Nephotettix cincticeps eingesetzt. Die Töpfe werden dann in eine Klimakammer eingebracht. Nach 24 Stunden wurde die Anzahl der toten Insekten festgestellt und die Abtötungsrate berechnet. Die Ergebnisse sind aus Tabelle C ersichtlich.

Tabelle C

| Verbindung | Abtötungsrate in % bei einer Wirkstoffkonzentration in TpM von 1000 | 100 | 10 |
|---|---|---|---|
| (1) | 100 | 100 | |
| (2) | 100 | 100 | |
| (3) | 100 | 100 | |
| (4) | 100 | 100 | |
| (5) | 100 | 100 | 100 |
| (6) | 100 | 100 | 100 |
| (7) | 100 | 100 | |
| (8) | 100 | 100 | |
| (10) | 100 | 100 | |
| (11) | 100 | 100 | |
| (12) | 100 | 100 | 100 |
| (13) | 100 | 100 | 100 |
| (14) | 100 | 100 | |

Tabelle C (Forsetzung)

| Verbindung | Abötungsrate in % einer Wirkstoffkonzentration in TpM von 1000 | 100 | |
|---|---|---|---|
| (15) | 100 | 100 | |
| (16) | 100 | 100 | |
| (17) | 100 | 100 | |
| (18) | 100 | 100 | 100 |
| (19) | 100 | 199 | |
| (20) | 100 | 100 | |
| (21) | 100 | 100 | |
| (22) | 100 | 100 | |
| (A) | 0 | | |
| (B) | 0 | | |
| (C) | 0 | | |

Beispiel D

Test auf Wirkung gegenüber der Stubenfliege (Musca domestica)

In eine Petrischale von 9 cm Durchmesser wurde ein Filterpapier eingelegt und mit 1 ml eines wässerigen Präparates, das nach Beispiel A hergestellt wurde eine vorgegebene Wirkstoffkonzentration aufweist, durchtränkt. Dann wurden 10 weibliche Imagines der gegenüber Organophosphorpräparaten resistenten Musca domestica in die Schale eingebracht. Die Schale wurde 24 Stunden lang in einer Klimakammer bei 28°C gehalten, nach Ablauf dieses Zeitraums wurde die Anzahl der toten Fliegen festgestelt und die Abtötungsrate berechnet. Die Ergebnisse sind aus Tabelle D ersichtlich.

Tabelle D

| Verbindung | Abtötungsrate in % bei einer Wirkstoffkonzentration in TpM von 1000 | 100 |
|---|---|---|
| (1) | 100 | 100 |
| (2) | 100 | 100 |
| (3) | 100 | 100 |
| (5) | 100 | 100 |
| (6) | 100 | 100 |
| (9) | 100 | 100 |
| (12) | 100 | 100 |
| (13) | 100 | 100 |
| (14) | 100 | 100 |

Tabelle D (Fortsezung)

| Verbindung | Abtötungsrate in % bei einer Wirkstoffkonzentration in TpM von | |
|---|---|---|
| | 1000 | 100 |
| (16) | 100 | 100 |
| (18) | 100 | 100 |
| (20) | 100 | 100 |
| (A) | 0 | |
| (B) | 0 | |
| (C) | 0 | |

Beispiel E

Test auf Wirkung gegenüber Tetranychus telarius (Sprühtest)

50—100 Imagines des Tetranychus telarius wurden auf die Blätter von Feuerbohnenpflanzen im Zweiblattstadium gesetzt, die in Töpfen von jeweils 9 cm Durchmesser gezogen worden waren. Zwei Tage nach der Beimpfung wurde ein wässeriges Präparat, das nach Beispiel A hergestellt worden war und eine vorgegebene Wirstoffkonzentration aufwies, in Mengen von 20 ml pro Topf über die Blätter versprüht. Darauf wurden die Töpfe 10 Tage lang in einem Treibhaus gehalten. Nach Ablauf dieses Zeitraums wurde die Bekämpfungswirkung nach folgender Skala bewertet:

3 = 0 % überlebende Schädlinge
2 = mehr als 0 %, aber weniger als 5 % überlebende Schädlinge
1 = 5—50 % überlebende Schädlinge
0 = mehr als 50 % überlebende Schädlinge

Die Ergebnisse sind aus Tabelle E ersichtlich.

Tabelle E

| Verbindung | Bekämpfungswirkung bei einer Wirkstoffkonzentration in TpM von | | |
|---|---|---|---|
| | 1000 | 300 | 100 |
| (4) | 3 | 3 | 3 |
| (13) | 3 | 3 | 3 |
| (15) | 3 | 3 | 3 |
| (17) | 3 | 3 | |
| (19) | 3 | 3 | 3 |
| (20) | 3 | 3 | 3 |
| (21) | 3 | 3 | |
| (22) | 3 | 3 | |
| (A) | 0 | | |
| (B) | 0 | | |
| (C) | 0 | | |

Beispiel F

Test auf Wirkung gegenüber Tetranychus telarius (Berieselungstest)

50—100 Imagines des Tetranychus telarius wurden auf die Blätter von Feuerbohnenpflanzen im Zweiblattstadium gesetzt, die in Töpfen von jeweils 9 cm Durchmesser gezogen worden waren. Nach zwei Tagen wurde ein wässeriges Präparat, das nach Beispiel A hergestellt worden war und eine vorgegebene Wirkstoffkonzentration aufwies, auf die Wurzein der Feuerbohnenpflanzen in Mengen von 20 ml pro Topf aufgebracht. Die Töpfe wurden dann 10 Tage lang in einem Treibhaus gehalten, nach Ablauf dieses Zeitraums wurde die Bekämpfungswirkung nach folgender Skala bewertet:

3 = 0 % überlebende Schädlinge
2 = mehr als 0 %, aber weniger als 5 % überlebende Schädlinge
1 = 5 bis 50 % überlebende Schädlinge
0 = mehr als 50 % überlebende Schädlinge

Die Ergebnisse sind aus der nachstehenden Tabelle ersichtlich.

Tabelle F

| Verbindung | Bekämpfungswirkung bei einer Wirkstoffkonzentration in TpM von 1000 | 300 | 100 |
|---|---|---|---|
| (5) | 3 | 3 | |
| (16) | 3 | 3 | 3 |
| (A) | 0 | | |
| (B) | 0 | | |
| (C) | 0 | | |

Beispiel G

Test auf Wirkung gegenüber Blatella germanica.

Ein Filterpapier wurde in eine Petrischale mit einem Durchmesser von 9 cm eingelegt und mit 1 ml eines wässerigen Präparates, das nach Beispiel A hergestellt worden war und eine vorgegebene Wirkstoffkonzentration aufwies, durchtränkt. 10 Imagines der Blatella germanica wurden in die Schale eingebracht, diese wurde 24 Stunden lang in einer Klimakammer bei 28°C gehalten, nach Ablauf dieses Zeitraums wurde die Anzahl der toten Insekten festgestellt und die Abtötungsrate berechnet. Die Ergebnisse sind aus Tabelle G ersichtlich.

Tabelle G

| Verbindung | Abtötungsrate in % bei einer Wirkstoffkonzentration in TpM von 1000 | 100 |
|---|---|---|
| (1) | 100 | 100 |
| (2) | 100 | 100 |
| (3) | 100 | 100 |
| (5) | 100 | 100 |
| (6) | 100 | 100 |
| (12) | 100 | 100 |
| (13) | 100 | 100 |
| (14) | 100 | 100 |
| (15) | 100 | 100 |

Tabelle G (Fortsezung)

| Verbindung | Abtötungsrate in % bei einer Wirkstoffkonzentration in TpM von 1000 | 100 |
|---|---|---|
| (16) | 100 | 100 |
| (17) | 100 | 100 |
| (18) | 100 | 100 |
| (19) | 100 | 100 |
| (20) | 100 | 100 |
| (21) | 100 | 100 |
| (22) | 100 | 100 |
| (A) | 0 | |
| (B) | 0 | |
| (C) | 0 | |

Beispiel H

Test auf Wirkung gegenüber Larven des Culex tritaeniorhynchus

In eine hochwandige Petrischale mit einem Durchmesser von 9 cm wurden 100 ml eines wässerigen Präparates, das nach Beispiel A hergestellt worden war und eine vorgegebene Wirkstoffkonzentration aufwies, eingebracht. Dann wurden 25 Larven des Culex tritaeniorhynchus im vierten Entwicklungsstadium in der Schale freigelassen und diese wurde 24 Stunden lang bei 28°C in einer Klimakammer gehalten. Nach Ablauf dieses Zeitraums wurde die Anzahl der toten Insekten festgestellt und die Abtötungsrate berechnet.

Die Ergebnisse sind aus Tabelle H ersichtlich.

Tabelle H

| Verbindung | Abtötungsrate in % bei einer Wirkstoffkonzentration in TpM von 1 | 0,1 |
|---|---|---|
| (13) | 100 | 100 |
| (14) | 100 | 100 |
| (21) | 100 | 100 |
| (A) | 0 | |
| (B) | 0 | |
| (C) | 0 | |

Beispiel J

Test auf Wirkung gegenüber Meloidogyne in cognita acrita

Ein Wirkstoffpräparat wurde durch Pulverisieren und Mischen von 2 Gew.-Teilen Wirkstoff und 98 Teilen Talk hergestellt.

Das wie vorstehend beschrieben hergestellte Wirkstoffpräparat wurde in Erdreich, das mit Meloidogyne incognita acrita beimpft worden war, in solchen Mengen eingebracht, daß sich Konzentrationen von 50 bzw. 25 bzw. 10 bzw. 5 TpM ergaben. Erdreich und Wirkstoff wurden unter Rühren gleichmäßig vermischt und dann in Töpfe mit einem Flächenausmaß von jeweils 0,0002 a eingebracht. In das so behandelte Erdreich wurden etwa 20 Samen der Tomatenvarietät Kurihara pro Topf eingesät. Die Tomatensamen wurden in einem Treibhaus gezogen, Nach vier Wochen wurden die Pflanzen aus dem Erdreich gezogen, ohne die Wurzeln zu beschädigen, der Befallsgrad an 10 ausgewählten Wurzeln wurde nach folgender Skala bewertet, um einen Wurzelknotenindex zu bestimmen:

Befallsgrad:
0 = keine Wurzelknotenbildung (perfekte Bekämpfung)
1 = leichte Wurzelknotenbildung
3 = starke Wurzelknotenbildung
4 = sehr starke Wurzelknotenbildung (entsprechend der unbehandelten Kontrolle)

$$\text{Wurzelknotenindex:} \quad \frac{\Sigma\ (\text{Skalabewertung x Anzahl d. Wurzeln})}{(\text{Gesamtzahl der geprüften Wurzen}) \times 4} \times 100$$

Aus diesem Index wurde folgende Bekämpfungswirkung errechnet:

$$\text{Bekämpfungswirkung} = \frac{\text{Wurzelknotenindex der unbehandelten Kontrollfläche minus WK der behandelten Fläche}}{\text{Wurzelknotenindex der unbehandelten Kontrollfläche}} \times 100$$

Eine Bekämpfungswirkung von 100 % bedeutet perfekte Bekämpfung. Die Ergebnisse sind aus Tabelle J ersichtlich.

Tabelle J

| Verbindung | Bekämpfungswirkung in % bei einer Wirkstoffkonzentration in TpM von 50 | 25 | 10 | 5 |
|---|---|---|---|---|
| (1) | 100 | 100 | 100 | |
| (2) | 100 | 100 | 100 | |
| (3) | 100 | 100 | 100 | |
| (4) | 100 | 100 | | |
| (5) | 100 | 100 | 100 | |
| (6) | 100 | 100 | | |
| (7) | 100 | 100 | 100 | 100 |
| (8) | 100 | 100 | 100 | |
| (9) | 100 | 100 | | |
| (10) | 100 | 100 | 100 | |
| (11) | 100 | 100 | 100 | |
| (12) | 100 | 100 | 100 | 100 |
| (13) | 100 | 100 | 100 | 100 |
| (14) | 100 | 100 | 100 | 100 |
| (15) | 100 | 100 | | |

Tabelle J (Fortsetzung)

| Verbindung | Bekämpfungswirkung in % bei einer Wirkstoffkonzentration in TpM von 50 | 25 | 10 | 5 |
|---|---|---|---|---|
| (16) | 100 | 100 | 100 | 100 |
| (17) | 100 | 100 | 100 | 100 |
| (18) | 100 | 100 | 100 | |
| (19) | 100 | 100 | | |
| (20) | 100 | 100 | 100 | |
| (21) | 100 | 100 | 100 | |
| (22) | 100 | 100 | | |
| (A) | 0 | | | |
| (B) | 0 | | | |
| (C) | 0 | | | |

Die nachstehenden Herstellungsbeispiele werden zur näheren Erläuterung des Verfahrens zur Herstellung der erfindungsgemäßen Verbindungen angeführt.

Beispiel 1

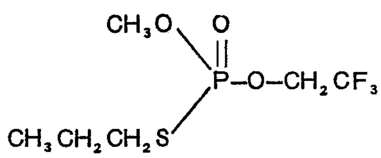

(1)

11 g Tritäthylamin wurden einer Mischung aus 19 g O-Methyl-S-n-Propylphosphorchloridthioat, 10 g 2,2,2 - Trifluoräthanol und 100 ml Toluol bei 0—10°C zugetropft. Die Temperatur wurde allmählich auf 50—55°C erhöht und das Gemisch wurde bei dieser Temperatur 2 Stunden gerührt.

Darauf wurde das Reaktionsgemisch abkühlen gelassen, mit 1 %-iger Salzsäure, einer 2 %-igen, wässerigen Kaliumhydroxidlösung und Wasser gewaschen und über wasserfreiem Natriumsulfat getrocknet. Das Toluol wurde abgedampft und der Rückstand bei vermindertem Druck destilliert. Man erhält 20,2 g O - Methyl - S - n - propyl - O - 2,2,2 - trifluoräthylphosphorthiolat (Kp. 78—80°C/0,9 mm Hg; $n_D^{20}$ = 1,4090).

Die Verbindungen in der nachstehenden Tabelle wurden analog dem in Beispiel 1 beschriebenen Verfahren hergestellt.

TABELLE 1

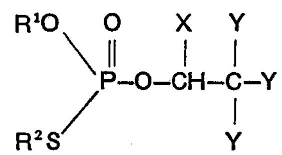

(I)

| Beispiel | $R^1$ | $R^2$ | X | Y | Physikalische Kenndaten |
|---|---|---|---|---|---|
| 2 | $CH_3-$ | $n\text{-}C_3H_7-$ | H | Cl | Kp 125–128 °C / 0,5 mm Hg; $n_D^{20}$ 1,4997 |
| 3 | $C_2H_5-$ | $n\text{-}C_3H_7-$ | $CF_3$ | F | $n_D^{20}$ 1,3898 |
| 4 | $C_2H_5-$ | $n\text{-}C_3H_7-$ | $CCl_3-$ | Cl | $n_D^{20}$ 1,5194 |
| 5 | $C_2H_5-$ | $n\text{-}C_3H_7-$ | $-OC_2H_5$ | F | Kp 90–92 °C / 0,8 mm Hg |
| 6 | $n\text{-}C_3H_7-$ | $n\text{-}C_3H_7-$ | H | F | Kp 80–83 °C / 0,5 mm Hg; $n_D^{20}$ 1,4155 |
| 7 | $C_2H_5-$ | $n\text{-}C_4H_9-$ | H | F | Kp 77–80 °C / 0,2 mm Hg; $n_D^{20}$ 1,4242 |
| 8 | $C_2H_5-$ | $n\text{-}C_4H_9-$ | H | Cl | Kp 134–136 °C / 0,6 mm Hg; $n_D^{20}$ 1,4885 |
| 9 | $C_2H_5-$ | $n\text{-}C_4H_9-$ | $CF_3-$ | F | Kp 80–82 °C / 0,2 mm Hg; $n_D^{20}$ 1,4040 |
| 10 | $C_2H_5-$ | $iso\text{-}C_4H_9-$ | H | Cl | $n_D^{20}$ 1,4852 |
| 11 | $C_2H_5-$ | $iso\text{-}C_4H_9-$ | H | F | $n_D^{20}$ 1,4165 |
| 12 | $C_2H_5-$ | $sec.\text{-}C_4H_9-$ | H | F | Kp 81–83 °C / 0,5 mm Hg; $n_D^{20}$ 1,4200 |
| 13 | $C_2H_5-$ | $sec.\text{-}C_4H_9-$ | H | Cl | Kp 122–124 °C / 0,2 mm Hg; $n_D^{20}$ 1,4895 |
| 14 | $C_2H_5-$ | $sec.\text{-}C_4H_9-$ | $CF_3$ | F | Kp 74–76 °C / 0,6 mm Hg; $n_D^{20}$ 1,3965 |
| 15 | $C_2H_5-$ | $CH_3OCH_2CH_2-$ | H | F | Kp 86–91 °C / 0,4 mm Hg; $n_D^{20}$ 1,4227 |
| 16 | $C_2H_5-$ | $C_2H_5OCH_2CH_2-$ | H | F | Kp 90–91 °C / 0,2 mm Hg; $n_D^{20}$ 1,4203 |

TABELLE 1 (Fortsetzung)

| Beispiel | $R^1$ | $R^2$ | X | Y | Physikalische Kenndaten |
|---|---|---|---|---|---|
| 17 | $C_2H_5-$ | $C_2H_5OCH_2CH_2-$ | H | Cl | Kp 143–145°C/1,0 mm Hg; $n_D^{20}$ 1,4901 |
| 18 | $C_2H_5-$ | $C_2H_5OCH_2CH_2-$ | $CF_3-$ | F | Kp 79–81°C/0,4 mm Hg; $n_D^{20}$ 1,3975 |
| 19 | $C_2H_5-$ | n-$C_3H_7OCH_2CH_2-$ | H | F | Kp 98–102°C/0,3 mm Hg; $n_D^{20}$ 1,4260 |
| 20 | $C_2H_5-$ | iso-$C_3H_7OCH_2CH_2-$ | H | F | Kp 94–98°C/0,2 mm Hg; $n_D^{20}$ 1,4269 |
| 21 | $C_2H_5-$ | iso-$C_3H_7OCH_2CH_2$ | H | Cl | Kp 127–132°C/0,2 mm Hg; $n_D^{20}$ 1,4843 |
| 22 | $C_2H_5-$ | n-$C_4H_9OCH_2CH_2$ | H | F | Kp 109–112°C/0,4 mm Hg; $n_D^{20}$ 1,4261 |

Beispiel 8—B

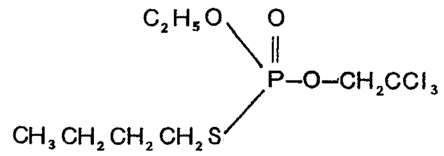

(8)

S - n - Butylphosphordichloridthioat (20,7 g) wurde in 150 ml Toluol gelöst, die Lösung wurde auf −50°C gekühlt. Dann wurden 14,9 g 2,2,2 - Trichloräthanol und darauf unter Rühren 11 g Triäthylamin bei −5—0°C zugegeben. Das Gemisch wurde über Nacht stehen gelassen und das Triäthylamin - Hydrochlorid abfiltriert. Dann wurde dem Filtrat ein Gemisch aus 5 g Äthanol und 11 g Triäthylamin bei 0—5°C zugetropft. Nach beendetem Zutropfen wurde die Temperatur allmählich auf 60°C erhöht und das Gemisch bei dieser Temperatur 4 Stunden lang gerührt. Nach dem Abkühlen wurde das Reaktionsgemisch mit einer 1 %-igen, wässerigen Salzsäurelösung, mit einer 2 %-igen, wässerigen Kaliumhydroxidlösung und Wasser gewaschen und über wasserfreiem Natriumsulfat getrocknet. Das Toluol wurde abgedampft und der Rückstand bei vermindertem Druck abdestilliert. Man erhält 16,8 g O - Äthyl - S - n - butyl - O - 2,2,2 - trichloräthylphosphorthioat.
(Kp = 134—136°C/0,6 mm Hg; $n_D^{20}$ = 1,4885).

Beispiel 8—C

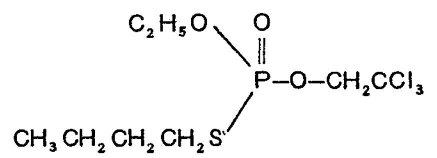

(8)

1,78 g n - Butyldisulfid wurden in 10 ml Toluol gelöst und mit 1,35 g bei −5°C zugetropftem Sulfurylchlorid versetzt. Nach beendeter Zugabe wurde das Gemisch 30 min. bei Raumtemperatur gerührt und dann auf −5°C gekühlt. Dann wurden 4,83 g O - Äthyl - O - (2,2,2 - trichloräthyl) - phosphit zugetropft. Nach beendetem Zutropfen wurde das Gemisch 30 min. bei Raumtemperatur gerührt, mit Eiswasser, einer 5 %-igen, wässerigen Kaliumhydroxidlösung und mit Wasser gewaschen und über wasserfreiem Natriumsulfat getrocknet. Das Toluol wurde abgedampft und der Rückstand bei vermindertem Druck destilliert. Man erhielt 5,6 g O - Äthyl - S - n - butyl - O - 2,2,2 - trichloräthylphosphorthioat als Endprodukt.
(Kp 134—136°C/0,6 mm Hg; $n_D^{20}$: 1,4885).

**Patentansprüche**

1. Organophosphorsäureester der allgemeinen Formel

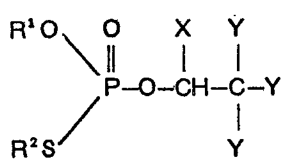

(I),

in welcher
$R^1$ für einen Alkylrest mit 1 bis 8 Kohlenstoffatomen steht,
$R^2$ einen Alkylrest mit 1 bis 8 Kohlenstoffatomen oder einen Alkoxyalkylrest mit 2 bis 8 Kohlenstoffatomen bedeutet,
X für Wasserstoff, Halogenalkyl mit 1 bis 8 Kohlenstoffatomen oder Alkoxy mit 1 bis 8 Kohlenstoffatomen
und
Y für Halogen stehen.

2. Verfahren zur herstellung von Organophosphorsäureestern gemäß Anspruch 1, dadurch gekennzeichnet, daß
a) ein Thiophosphorylhalogenid der allgemeinen Formel

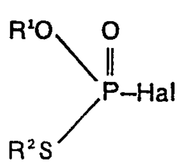

(II),

worin
$R^1$ und $R^2$ die obenangeführte Bedeutung besitzen und
Hal Halogen bedeutet, mit einem Alkohol oder Alkoholat der allgemeinen Formel

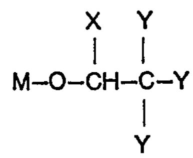

(III),

worin
X und Y die oben angeführte Bedeutung besitzen und
M Wasserstoff oder ein Alkalimetall bedeutet, oder
b) ein Thiophosphorylhalogenid der allgemeinen Formel

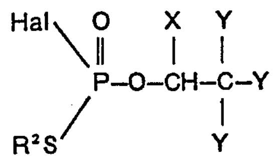

(IV),

worin
$R^2$, X und Y die oben angeführte Bedeutung besitzen und
Hal Halogen bedeutet,mit einem Alkohol oder Alkoholat der allgemeinen Formel

$$M—O—R^1 \quad (V),$$

worin
$R^1$ die oben angeführte Bedeutung besitzt und
M für Wasserstoff oder ein Alkalimetall steht, oder
c) ein Phosphit der allgemeinen Formel

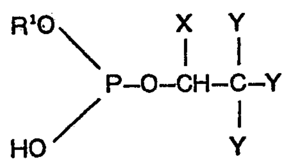

(VI),

worin
$R^1$, X und Y die oben angeführte Bedeutung besitzen, mit einem Sulfenylhalogenid der allgemeinen Formel

$$R^2S—Hal \quad (VII),$$

worin
$R^2$ die oben angeführte Bedeutung besitzt und
Hal Halogen bedeutet, umgesetzt wird.

3. Insektizide akarizide und nematozide Mittel gekennzeichnet durch einen Gehalt an Verbindungen gemäß Anspruch 1.

4. Verfahren zur Bekämpfung von Insekten, Milben und Nematoden, dadurch gekennzeichnet, daß man Verbindungen gemäß Anspruch 1 auf die genannten Schädlinge bzw. deren Lebensraum einwirken läßt.

5. Verwendung von Verbindungen gemäß Anspruch 1 zur Bekämpfung von Insekten, Milben und Nematoden.

6. Verfahren zur Herstellung von insektiziden, akariziden und nematoziden Mitteln, dadurch gekennzeichnet, daß man Verbindugen gemäß Anspruch 1 mit Streckmitteln und/oder oberflächenaktiven Mitteln mischt.

**Claims**

1. Organophosphoric acid esters of the general formula:

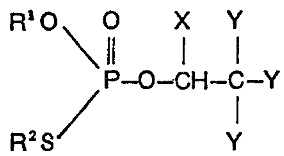

(I)

in which

$R^1$ represents alkyl with 1—8 carbon atoms,

$R^2$ represents alkyl with 1—8 carbon atoms or alkoxyalkyl with 2—8 carbon atoms,

X represents hydrogen, halogenoalkyl with 1—8 carbon atoms or alkoxy with 1—8 carbon atoms, and

Y represents halogen,

2. A process for the preparation of organophosphoric acid esters according to claim 1, characterised in that

(a) a thiophosphoryl halide of the general formula

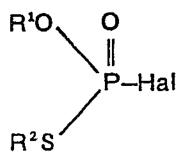

(II),

in which

$R^1$ and $R^2$ have the meanings stated above, and

Hal represents halogen,

is reacted with an alcohol or alcoholate of the general formula

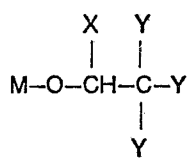

(III),

in which

X and Y have the meanings stated above, and

M represents hydrogen or an alkali metal, or

(b) a thiophosphoryl halide of the general formula

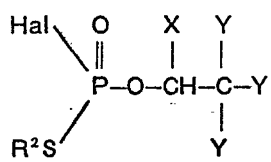

(IV),

in which

$R^2$, X and Y have the meanings stated above, and

Hal represents halogen,

is reacted with an alcohol or alcoholate of the general formula

$$M—O—R^1 \qquad (V),$$

in which

$R^1$ has the meaning stated above, and

M represents hydrogen or an alkali metal, or

(c) a phosphite of the general formula

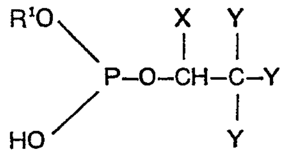 (VI),

in which $R^1$, X and Y have the meanings stated above, is reacted with a sulfenyl halide of the general formula

$R^2S—Hal$ (VII),

in which

$R^2$ has the meaning stated above, and

Hal represents halogen.

3. Insecticides, acaricides and nematocides characterised by a content of compounds according to claim 1.

4. A process for combating insects, mites and nematodes, characterised in that compounds according to claim 1 are allowed to act on the named parts or their living space.

5. The use of compounds according to claim 1 for combating insects, mites and nematodes.

6. A process for the preparation of insecticides, acaricides and nematocides, characterised in that compounds according to claim 1 are mixed with extenders and/or surface-active agents.

**Revendications**

1. Esters organiques d'acide phosphorique, caractérisés en ce qu'ils répondent à la formule générale

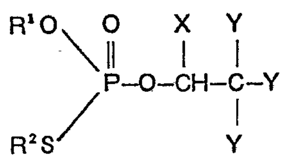 (I)

dans laquelle $R^1$ est un reste alkyle en $C_1$—$C_8$, $R_2$ est un reste alkyle en $C_1$—$C_8$ ou alcoxyalkyle en $C_2$—$C_8$; X est un atome d'hydrogène ou un reste halogénoalkyle en $C_1$—$C_8$ ou alcoxy en $C_1$—$C_8$ et Y est un atome d'halogène.

2. Procédé de préparation d'esters organiques d'acide phosphorique selon la revendication 1, caractérisé en ce que l'on fait réagir.

a) un halogénure de thiophosphoryle de formule générale

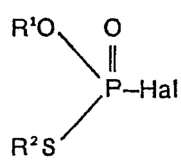 (II),

dans laquelle $R^1$ et $R^2$ sont tels que définis ci-dessus et Hal est un halogène avec un alcool ou un alcoolate de formule générale

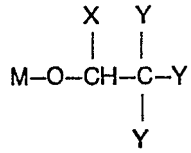 (III),

dans laquelle X et Y sont tels que définis ci-dessus et M est l'hydrogène ou un métal alcalin, ou bien

b) un halogénure de thiophosphoryle de formule générale

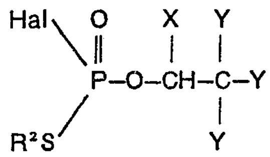

(IV),

dans laquelle $R^2$, X et Y sont tels que définis ci-dessus et Hal représente un halogène avec un alcool ou un alcoolate de formule générale

$$M—O—R^1 \qquad (V)$$

dans laquelle $R^1$ est tel que défini ci-dessus et M est l'hydrogène ou un métal alcalin, ou bien c) un phosphite de formule générale

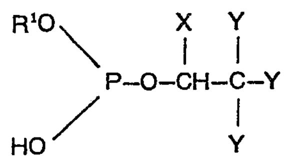

(VI),

dans laquelle $R^1$, X et Y sont tels que définis ci-dessus avec un halogénure de sulfényle de formule générale

$$R^2S—Hal \qquad (VII)$$

dans laquelle $R^2$ est tel que défini ci-dessus et Hal représente un halogène.

3. Insecticides, acaricides et nématocides, caractérisés en ce qu'ils contiennent des substances selon la revendication 1.

4. Procédé pour combattre les insectes, les mites et les nématodes, caractérisé en ce que l'on fait agir des composés selon la revendication 1 sur les parasites mentionnés ou leurs habitats.

5. Utilisation des composés selon la revendication 1, pour la lutte contre les insectes, mites et nématodes.

6. Procédé pour la préparation d'insecticides, d'acaricides et nématocides, caractérisé en ce que l'on mélange des composés selon la revendication 1 avec des agents diluants et/ou des tensioactifs.